# EUROPEAN PATENT SPECIFICATION

(11) **EP 2 446 786 B1**
(45) Date of publication and mention of the grant of the patent: **30.09.2020**
(21) Application number: 10792262.7
(22) Date of filing: 20.05.2010
(51) Int. Cl.: A47J 31/00, A47J 31/36, B01D 11/02

(54) **METHOD FOR EXTRACTING PUERARIN FROM KUDZU BY PRESSURE-CYCLING EXTRACTION**
VERFAHREN ZUR EXTRAKTION VON PUERARIN AUS KUDZU MITTELS DRUCKWECHSELEXTRAKTION
PROCÉDÉ D'EXTRACTION DE LA PUÉRARINE DU KUDZU PAR EXTRACTION À CYCLE DE PRESSION

(30) Priority: 26.06.2009 KR 20090057901
(43) Date of publication of application: 02.05.2012
(73) Proprietor: Amorepacific Corporation, Seoul 140-777 (KR)
(72) Inventor: PARK, Jun Seong, Suwon-si Gyeonggi-do 443-470 (KR); KIM, Dong Hyun, Suwon-si Gyeonggi-do 440-300 (KR); MOON, Eun Jeong, Seoul 138-793 (KR); YU, Sun Hye, Seongnam-si Gyeonggi-do 463-772 (KR); KIM, Eun Joo, Suwon-si Gyeonggi-do 440-709 (KR); KIM, Duck Hee, Seoul 137-030 (KR); KIM, Han Kon, Suwon-si Gyeonggi-do 443-370 (KR); KIM, Myung Kyoo, Yongin-si Gyeonggi-do 446-759 (KR)
(74) Representative: Hasler, Erich
(86) International application number: PCT/KR2010/003189
(87) International publication number: WO 2010/150980

(56) References cited:
- WO-A1-2008/061418
- CN-A- 1 156 566
- CN-A- 1 788 822
- GB-A- 2 028 293
- JP-A- H0 723 714
- JP-A- H01 159 004
- JP-A- 2001 300 205
- JP-A- 2005 040 387
- JP-B2- 3 484 612
- KR-B1- 100 411 746
- RU-C2- 2 174 032
- US-A1- 5 558 006
- US-A1- 2007 154 571

## Description

### [Technical Field]

The present invention relates to a pressure-cycling type extraction method. A pressure-cycling type extraction device useful for carrying out the method is also disclosed.

### [Background Art]

In general, hot water extraction is commonly employed for extraction of natural products or medicinal herbs. However, the hot water extraction process is problematic in that the extraction target substance may be degraded by heat, resulting in discoloration or bad smell or decomposition of the active ingredient.

To solve the thermal degradation problem, low-temperature extraction is often used. Although this method can prevent the degraded of the active ingredient, it is commercially inapplicable since the extraction efficiency is decreased greatly. And, an extraction method using an organic solvent is problematic in that the solvent remaining after the extraction may be harmful to the human body.

The following documents have been identified during examination: JP 2005 040387, JP H07 23714 A, RU 2 174 032 C2, GB 2 028 293 A, CN 1 788 822 A JP H01 159004 A, JP3 484612 B2, WO 2008/061418 A1 and CN 1 156 566 A.

The first document, JP 2005 040387, is concerned with an apparatus for extracting beverage and seasoning soup stock. The apparatus includes a pressure control pipe which is provided with an air injection portion.

The second document, JP H07 23714 A granted as JP 3 484612 B2, the seventh document, is aimed at efficiently extracting tea, etc. The extracting tank used for this purpose is equipped at its bottom with nozzles that allow the introduction of an inert gas which serves the purpose of stirring a raw material immersed in water.

The third document, RU 2 174 032 C2, relates to an apparatus used for extraction of plant, biological, and other raw material by liquid and gaseous extractants. The apparatus includes an extractor and a bubbler arranged in a lower part of the extractor.

The fourth document, GB 2 028 293 A, relates to a method of leaching material from a cavity, in particular a method of reprocessing nuclear fuel, for example in an acid dissolver in which nuclear fuel materials and fission products are dissolved out of chopped pieces of nuclear fuel pins i.e. nuclear fuel material clad with a material such as a stainless steel nuclear fuel can. The material is contacted with a liquid and the liquid is subjected to a number of pressure cycles, each pressure cycle involving a decrease in pressure to cause boiling of the liquid, followed by a rise in pressure to inhibit the boiling.

The fifth document, CN 1 788 822 A, relates to biomass extracting technology, especially a low temperature pressure difference extracting technology. Pressure variation technology of vacuum-normal pressure or vacuum-pressurizing is used in speed the leaching of intracellular solution during extraction. The technological process includes circulation of vacuum pumping, spraying solvent, reducing vacuum, pressurizing and decompressing. The technology is used for extracting effective components from animal, plant and microbe material for production of medicine, health article and food.

The sixth document, JP H01 159004 A, relates to a pressure-cycling type of extraction method in which a compression process and a decompression process are carried out alternately. In an example a liquid extractant R (e.g. hexane) is poured in a pressure resisting container and, after solids K (e.g. sardines) are immersed in the liquid extractant R as an extraction material, the inside of the pressure resisting container is subjected repeatedly and alternately to a predetermined pressure and vacuum a plurality of times, resulting in an extraction (e.g. of fish oil) from the solids.

The seventh document, WO 2008/061418 A1, and eighth document, CN 1 156 566 A, disclose extraction from the kudzu plant.

### [Technical Problem]

The present disclosure is directed to providing a pressure-cycling type extraction device.

The present disclosure is also directed to providing a pressure-cycling type extraction method.

The present disclosure is also directed to providing an extract extracted by a pressure-cycling type extraction device and a composition containing the same.

### [Description]

In one general aspect (not falling under the scope of the appended claims), the present disclosure provides a pressure-cycling type extraction device comprising: an extraction unit for accommodating and extracting an extraction target substance; a compression unit for increasing the pressure inside the extraction unit; and a decompression unit for decreasing the pressure inside the extraction unit; wherein the pressure inside the extraction unit is increased and decreased by alternately operating the compression unit and the decompression unit, and the extraction unit comprises a bubbling nozzle for supplying bubbles into the extraction target substance.

In another general aspect, the present disclosure provides a pressure-cycling type extraction method, comprising carrying out a compression process and a decompression process alternately. The claimed invention concerns a method of this type according to claim 1.

The extraction device and method using pressure cycling according to the present disclosure are advantageous in that extraction is possible at relatively low temperature and extraction efficiency is very high. Also, bad smell or thermal degradation of the extraction target substance can be prevented. The extraction device and method can be widely applied in the fields of foods and cosmetics.

An embodiment of a pressure-cycling type extraction device useful for carrying out the disclosed method comprises: an extraction unit for accommodating and extracting an extraction target substance; a compression unit for increasing the pressure inside the extraction unit; and a decompression unit for decreasing the pressure inside the extraction unit. The compression unit and the decompression unit operate alternatingly to increase or decrease the pressure inside the extraction unit. The pressure-cycling type extraction device may adjust the number and frequency of compression and decompression according to the properties of the extraction target substance. Also, the extraction condition may be optimized by adjusting compression and decompression time according to the properties of the extraction target substance.

In an exemplary embodiment, the extraction unit may comprise a bubbling nozzle and/or a spray nozzle to improve extraction efficiency.

The bubbling nozzle facilitates stirring of the extraction target substance by means of bubbles formed by the nozzle. Inside the extraction device, there may occur local differences of extraction condition such as temperature, pressure, etc. By supplying bubbles of air or inert gas by means of the bubbling nozzle, the extraction target substance may be stirred more effectively and a more uniform extract may be obtained. Also, the bubbling nozzle allows extraction at low temperature by improving the extraction efficiency. The extraction at low temperature allows the volatile components of the extraction target substance to remain and, thus, the quality of the extract can be significantly improved. In an exemplary embodiment, the inert gas supplied by the bubbling nozzle is nitrogen or helium, specifically nitrogen.

The spray nozzle sprays liquid to the extraction target substance while the extraction is carried out, thus removing foams generated during the extraction. In an exemplary embodiment, the spray nozzle sprays an extraction solvent or water, more specifically low-temperature water. In an exemplary embodiment, the extraction solvent sprayed by the spray nozzle is C₁-C₅ lower alcohol. The spray nozzle makes it unnecessary to use a defoaming agent.

In an exemplary embodiment, the extraction unit may be in the form of, for example an integral tank, although not limited thereto. When the extraction unit is in the form of an integral tank, it may have inlet ports for supplying the extraction target substance, the solvent, etc. and an outlet port for discharging the extract to outside.

In another exemplary embodiment, the extraction unit may comprise an extraction bath wherein the extraction target substance is held and an upper plate. The extraction bath holds the extraction target substance and a solvent, if necessary. The upper plate is disposed on the extraction bath and closes the extraction bath. The extraction bath may be engaged with the upper plate by any means that allow the extraction target substance held in the extraction bath to be isolated, without special limitation. For example, the extraction bath and the upper plate may be engaged with each other by protrusions formed on the top surface of the extraction bath and protrusions formed on the bottom surface of the upper plate.

The extraction device may further comprise a temperature controller. The temperature controller heats the extraction target substance held in the extraction unit. By heating the extraction target substance using the temperature controller, extraction efficiency may be improved.

In an exemplary embodiment, the extraction device alternately provides pressurizing and depressurizing conditions. A compression unit may increase pressure by injecting gas into the extraction unit. The gas injected by the compression unit may be air or inert gas, specifically nitrogen (N₂) or helium (He) gas, more specifically nitrogen gas, although not being limited thereto. The decompression unit may decrease pressure by applying vacuum to the extraction unit or discharging air through a vent.

The present disclosure also provides a pressure-cycling type extraction method, comprising carrying out a compression and a decompression alternately.

In an exemplary embodiment, the pressure-cycling type extraction method may comprise: (a) a compression process increasing pressure; and (b) a decompression process decreasing pressure, alternatingly. The extracting method may further comprise: (c) supplying bubbles to the extraction target substance during said compression and/or decompression.

In another exemplary embodiment, the extraction method may further comprise: (d) spraying liquid to the extraction target substance during the extraction.

The extracting method may be a solvent extraction method of extracting the extraction target substance by immersing it in a solvent. The solvent used in the extracting method may be water or C₁-C₅ lower alcohol, more specifically water, although not being limited thereto.

Disclosed is the use of a pressure during said compression of, for example, 0.98∼9.80 bar (1-10 kgf/cm²), specifically 1.47-2.94 bar (1.5-3 kgf/cm²). Depending on situations, an intermediate pressure of about 4.90 bar (5 kgf/cm²) may be used. The pressure during said decompression may be 0.13-1.01 bar (100-760 mmHg), specifically 0.67-0.93 bar (500-700 mmHg). Depending on situations, the depressurizing may be performed in vacuum. In the extraction method according to the present disclosure, the pressurizing and depressurizing may be performed alternatingly depending on the properties of the extraction target substance. If necessary, the conditions of the compression and decompression processes may be set differently. According to the invention the compression process increases the pressure to 1.47 - 2.94 bar (1.5 - 3 kgf/cm²) and the decompression process decreases the pressure to 0.13 - 1.01 bar (100 - 760 mmHg).

The number and frequency of the compression and decompression processes are not specially limited and may be set differently according to the properties of the extraction target substance. In an exemplary embodiment, each of the compression and decompression processes may be performed for 10 minutes to 1 hour, specifically for 30 minutes. In another exemplary embodiment, the compression and decompression processes may be repeated 1-30 times, specifically 2-10 times, more specifically 4-5 times. By repeating the compression and decompression processes 2-3 times, sufficient extraction efficiency may be achieved.

Since compression and decompression are performed alternatingly, the extraction method according to the present disclosure allows extraction at a relatively lower temperature than the hot water extraction method. Accordingly, the extraction temperature may be 0-100 °C, specifically 30-85 °C. The extracting method allows effective extraction even at a relatively low temperature of 50-75 °C. Depending on situations, cold extraction may also be carried out.

The present disclosure further provides an extract extracted using the extraction device or by the extraction method according to the present disclosure. Since the extract according to the present disclosure is nearly free from discoloration, bad smell or thermal degradation, the inherent fragrance and nutritional ingredients of the extraction target substance may be maintained effectively. The extract may be used as an active ingredient or an additive in foods, cosmetics or pharmaceuticals. In an exemplary embodiment, the present disclosure provides a food composition comprising the extract. In another exemplary embodiment, the present disclosure provides a cosmetic composition comprising the extract.

### [Short Description of Drawings]

FIG. 1 schematically shows a cross-section of an extraction device according to an exemplary embodiment of the present disclosure;
FIG. 2 is an enlarged view showing engagement of an extraction bath and an upper plate in a pressure-cycling type extraction device;
FIG. 3 shows extraction ratio of different extraction methods with temperature; and
FIG. 4 shows extraction ratio of different extraction methods with extraction time.

### [Detailed Description of Drawings]

Now, extraction devices using pressure cycling according to exemplary embodiments of the present disclosure will be described in more detail with reference to the attached drawings.

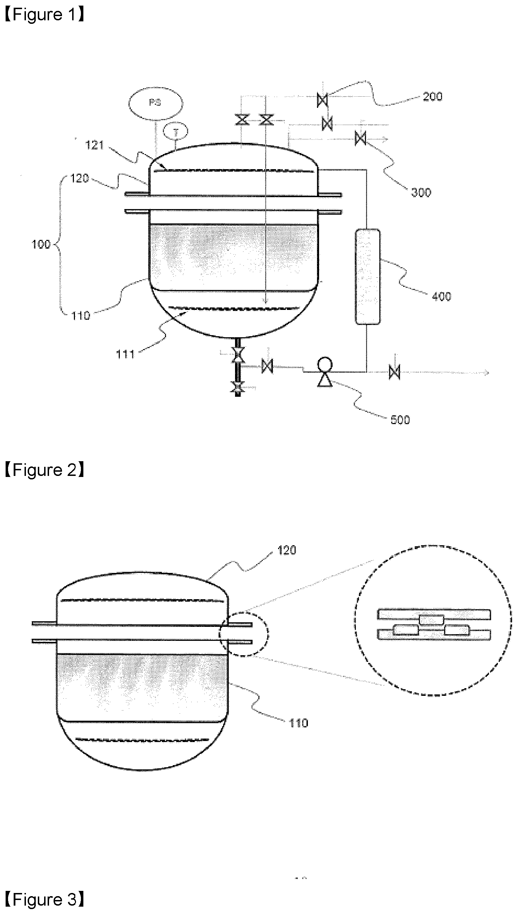

FIG. 1 schematically shows a cross-section of an extraction device according to an exemplary embodiment of the present disclosure. The extraction device comprises an extraction unit 100 wherein an extraction target substance is extracted, a compression unit 200 increasing the pressure inside the extraction device, and a decompression unit 300 decreasing the pressure inside the extraction device.

The extraction unit 100 comprises an extraction bath 110 accommodating the extraction target substance, and an upper plate 120 serving as a lid of the extraction bath 110. A bubbling nozzle 111 is provided at the lower portion of the extraction bath 110. The bubbling nozzle 111 supplies air bubbles during the extraction process to facilitate stirring of the extraction target substance. The upper plate 120 has a spray nozzle 121 at the lower portion thereof. By spraying low-temperature water, the spray nozzle 121 removes foams generated during the extraction.

The compression unit 200 and the decompression unit 300 are connected to the upper plate 120. The compression unit 200 increases the pressure inside the extraction device by supplying air or nitrogen (N₂) gas. The decompression unit 300 decreases the pressure inside the extraction device by applying vacuum or discharging air through a vent. The operation time and frequency of the compression unit 200 and the decompression unit 300 are controlled by a pressure controller (not shown). A temperature controller 400 is connected to the extraction device. An extract heated by the temperature controller 400 is circulated into the extraction bath 110 by a circulation pump 500.

FIG. 2 shows engagement of the extraction bath and the upper plate in a pressure-cycling type of extraction device according to an embodiment of the present disclosure. The extraction bath 110 has two protrusions formed on its top surface, which are engaged with a protrusion formed on the bottom surface of the upper plate 120.

The examples and experiments will now be described. The following examples and experiments are for illustrative purposes only and not intended to limit the scope of the present disclosure.

### [Example 1] Pressure cycling extraction

Puerarin was extracted from the root of kudzu using the extraction device shown in FIG. 1. Specifically, the root of kudzu was immersed in 10 times the volume water and extracted for 2 hours while alternatingly pressurizing and depressurizing with 30-minute intervals. The pressure during compression was 1.96 bar (2 kgf/cm²) and the pressure during decompression was 0.73∼0.87 bar (600±50 mmHg), and the extraction temperature was set at 75 °C.

### [Comparative Example 1] Hot water extraction

Puerarin was extracted from the root of kudzu by hot water extraction. Specifically, the root of kudzu was immersed in 10 times the volume water and extracted for 2 hours at 75 °C. Compression or decompression was not carried out during the extraction.

### [Test Example 1] Comparison of extraction ratio at different temperatures

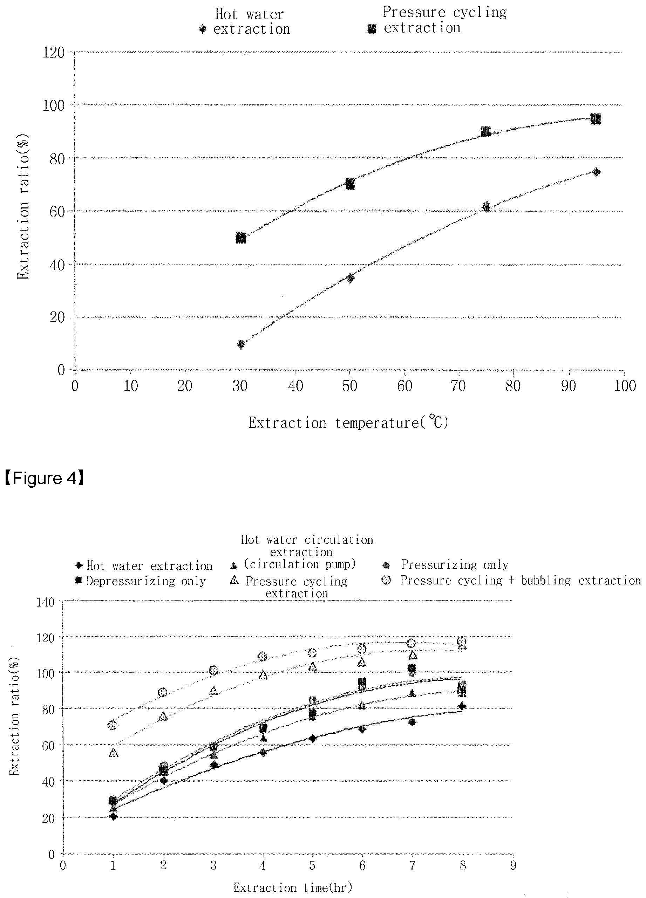

Puerarin was extracted from the root of kudzu in the same manner as described in Example 1 and Comparative Example 1 and extraction ratio was measured. But, the extraction time was 4 hours, compression and decompression were repeated with 1-hour intervals, and the extraction temperature was varied from 30 to 100 °C. The result is shown in FIG. 3. In FIG. 3, the extraction ratio (%) is given relative to the methanol reflux extraction according to the Korean Pharmacopoeia.

Referring to FIG. 3, the pressure cycling extraction exhibits 20-40% higher extraction ratio than the hot water extraction. Especially, the extraction ratio is good at the low temperature range. For example, the extraction ratio is less than 10% at 30 °C and less than 40% at 50 °C for the hot water extraction. In contrast, the pressure cycling extraction according to the present disclosure exhibits an extraction ratio of 50% or higher at 30 °C and an extraction ratio reaching 70% at 50 °C.

It can be seen that the pressure cycling extraction according to the present disclosure allows effective extraction at relatively low temperatures where extraction is hardly accomplished by the existing hot water extraction method. Accordingly, the pressure cycling extraction according to the present disclosure can be effectively utilized for extraction of thermally susceptible ingredients.

### [Test Example 2] Change of extract with time

Change of the extracts extracted by hot water extraction and pressure cycling extraction was observed in order to investigate the efficiency of pressure cycling extraction.

Hot water extraction and pressure cycling extraction were performed in the same manner as described in Test Example 1. In each case, extraction time was 2 hours. The obtained extracts were filtered through a 0.45-µm filter to remove microorganisms and precipitation was observed in a refrigerator. The result is shown in Table 1.

**Table 1**

| Days | 1 day | | 7 days | | 15 days | | 30 days | |
|---|---|---|---|---|---|---|---|---|
| Extraction temperature | HWE | PCE | HWE | PCE | HWE | PCE | HWE | PCE |
| 30 °C | - | - | - | - | - | - | - | - |
| 50 °C | - | - | - | - | * | - | * | - |
| 75 °C | - | - | - | - | * | * | * | * |
| 95 °C | * | - | ** | ** | *** | *** | *** | *** |

| | | | | | | | | |
|---|---|---|---|---|---|---|---|---|
| HWE: hot water extraction PCE: pressure cycling extraction *: slightly hazy, **: precipitation observed, ***: slight precipitation, ****: considerable precipitation, *****: severe precipitation | | | | | | | | |

As seen from Table 1, significant differences in precipitation were observed depending on the extraction temperature. The temporal stability was relatively superior for pressure cycling extraction when the extraction temperature was relatively low at 50-75 °C.

### [Test Example 3] Comparison of extraction ratio for hot water extraction, extraction by pressurizing only, extraction by depressurizing only and pressure cycling extraction

Extraction ratio was compared for hot water extraction, extraction by pressurizing only, extraction by depressurizing only and pressure cycling extraction. Extraction time was 8 hours and extraction ratio was measured every hour by taking samples. The extraction temperature was set at 75 °C since some ingredients may not be extracted at lower temperatures and thermally weak ingredients may be degraded at higher temperatures. The specific extraction condition is shown in Table 2, and the result is shown in FIG. 4.

**Table 2**

| Extraction method | Extraction temperature | Pressurizing condition | Depressurizing condition | Note |
|---|---|---|---|---|
| Hot water extraction | 75 °C | - | - | |
| Hot water circulation extraction | 75 °C | - | - | Hot water extraction with circulation pump |
| Pressurizing only | 75 °C | 1.96 bar (2 kgf/cm²) | - | |
| Depressurizing only | 75 °C | - | 0.73∼0.87 bar (600±50 mmHg) | |
| Pressure cycling extraction | 75 °C | 1.96 bar (2 kgf/cm²) | 0.73∼0.87 bar (600±50 mmHg) | Alternatingly pressurizing and depressurizing with 30-minute intervals |
| Pressure cycling + bubbling extraction | 75 °C | 1.96 bar (2 kgf/cm²) | 0.73∼0.87 bar (600±50 mmHg) | Releasing vacuum Injecting nitrogen |
| | | | | by bubbling Alternatingly pressurizing and depressurizing with 30-minute intervals |

Referring to FIG. 4, hot water circulation extraction wherein a circulation pump was used for stirring was exhibited better extraction efficiency than hot water extraction, close to those of pressurizing only and depressurizing only. The extraction yield attained in 8 hours with hot water extraction was achieved only in 2 hours with pressure cycling extraction. When bubbling was combined with pressure cycling extraction, the maximum extraction yield was attained even faster than simple pressure cycling extraction. The pressure cycling extraction combined with bubbling was effective in extracting thermally weak ingredients at low temperature, with remarkably higher efficiency than other methods.

The extraction device and method according to the present disclosure allow effective extraction of natural products, medicinal herbs, etc. without discoloration, bad smell or thermal degradation of the extraction target substance.

**[List of Reference Numbers]**

| | | | |
|---|---|---|---|
| 100: | extraction unit | 110: | extraction bath |
| 111: | bubbling nozzle | 120: | upper plate |
| 121: | spray nozzle | 200: | compression unit |
| 300: | decompression unit | 400: | temperature controller |
| 500: | circulation pump | | |

## Claims

1. A pressure-cycling type extraction method for extracting puerarin by immersing a kudzu in a solvent **characterized by**,
comprising carrying out an extracting under a compression process and a decompression process alternately, and
removing foams generated during the extraction by spraying water to a root of the kudzu,
wherein the extracting is extracting puerarin by immersing a root of kudzu in water as the solvent, with the root of kudzu immersed in 10 times the volume water,
wherein during and extraction time of 2 to 8 hours the compression process and the decompression process are performed by alternatingly pressurizing and depressurizing with 30-minute to 1-hour intervals, respectively,
wherein the compression process increase a pressure to 1.96 bar (2 kgf/cm²) and decompression process decreases a pressure to 0.73∼0.87 bar (600±50 mmHg),
wherein the extraction temperature is in the range of 30°C to 85 °C, and
wherein bubbles are supplied to the root of kudzu during the extraction.

2. The pressure-cycling type of extraction method according to anyone of the claims, wherein extraction temperature is selected from 30°C, 50°C or 75°C, most preferably 75°C.

## Patentansprüche

1. Druckzyklusextraktionsverfahren zur Extraktion von Puerarin durch Eintauchen einer Kudzu in ein Lösungsmittel, **gekennzeichnet dadurch**, zu umfassen:
Ausführen einer Extraktion in einem abwechselnden Kompressions- und Dekompressions-Prozess, und
Beseitigung von Schaum, der sich während der Extraktion bildet, durch Sprühen von Wasser auf eine Wurzel der Kudzu,
wobei die Extraktion die Extraktion von Puerarin durch Eintauchen einer Kudzuwurzel in Wasser als Lösungsmittel ist, wobei die Kudzuwurzel in das zehnfache Volumen Wassers eingetaucht wird,
wobei während einer Extraktionsdauer von 2 bis 8 Stunden der Kompressions- und Dekompressions-Prozess durch Abwechseln von Druckerhöhung und Druckverringerung in Intervallen von jeweils 30 Minuten bis einer Stunde erfolgt,
wobei im Kompressionsprozess der Druck auf 1,96 bar (2 kgf/cm²) erhöht wird und im Dekompressionsprozess der Druck auf 0,73-0,87 bar (600±50 mmHg) verringert wird,
wobei die Extraktionstemperatur im Bereich von 30°C bis 85°C liegt, und
wobei der Kudzuwurzel während der Extraktion Blasen zugeführt werden.

2. Druckzyklusextraktionsverfahren nach irgendeinem der Patentansprüche, in dem die Extraktionstemperatur unter 30°C, 50°C oder 75°C gewählt wird, am meisten bevorzugt 75°C.

## Revendications

1. Procédé d'extraction de type cyclage de pression pour extraire de la puérarine en immergeant un kudzu dans un solvant **caractérisé par** :
le fait de comprendre l'exécution d'une extraction dans un processus de compression et un processus de décompression en alternance et
l'enlèvement de mousses générées pendant l'extraction en pulvérisant de l'eau à une racine du kudzu,
cependant que l'extraction est l'extraction de puérarine en immergeant une racine de kudzu dans de l'eau comme solvant avec la racine de kudzu immergée dans dix fois le volume d'eau,
cependant que pendant la durée d'extraction de 2 à 8 heures le processus de compression et de décompression sont réalisées en pressurisant et
dépressurisant en alternance avec des intervalles de respectivement 30 minutes à une heure,
cependant que le processus de compression augmente une pression à ,196 bar (2 kgf/cm²) et le processus de décompression diminue une pression à 0,73 à 0,87 bar (600±50 mmHg),
cependant que la température d'extraction est de l'ordre de 30°C à 85°C et cependant que des bulles sont alimentées sur la racine de kudzu pendant l'extraction.

2. Procédé d'extraction de type cyclage de pression selon l'une quelconque des revendications, cependant que la température d'extraction est sélectionnée parmi 30°C, 50°C ou 75°C, de préférence 75°C.
